(19) Europäisches Patentamt
European Patent Office
Office européen des brevets

(11) **EP 1 997 238 B1**

(12) **FASCICULE DE BREVET EUROPEEN**

(45) Date de publication et mention
de la délivrance du brevet:
**24.08.2011 Bulletin 2011/34**

(21) Numéro de dépôt: **06726113.1**

(22) Date de dépôt: **21.03.2006**

(51) Int Cl.:
*H04B 5/00* *(2006.01)*     *H02J 17/00* *(2006.01)*

(86) Numéro de dépôt international:
**PCT/FR2006/000614**

(87) Numéro de publication internationale:
**WO 2007/107642 (27.09.2007 Gazette 2007/39)**

(54) **DISPOSITIF DE TRANSPORT DE L ENERGIE PAR INFLUENCE PARTIELLE A TRAVERS UN MILIEU DIELECTRIQUE**

EINRICHTUNG ZUM TRANSPORTIEREN VON ENERGIE DURCH PARTIALINFLUENZ DURCH EIN DIELEKTRISCHES MEDIUM

DEVICE FOR TRANSPORTING ENERGY BY PARTIAL INFLUENCE THROUGH A DIELECTRIC MEDIUM

(84) Etats contractants désignés:
**DE FR GB**

(43) Date de publication de la demande:
**03.12.2008 Bulletin 2008/49**

(73) Titulaire: **TMMS Co., Ltd.**
**Kyoto 604-8241 (JP)**

(72) Inventeurs:
• **CAMURATI, Patrick**
**F-75011 Paris (FR)**

• **BONDAR, Henri**
**Kyoto-fu (JP)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**DE-A1- 10 304 584     US-A- 645 576**

## Description

Domaine technique:

L'invention se rattache au domaine du transport de l'énergie électrique.

Les observations sur les effets de l'électricité, d'abord de manière empirique aux XVIIe et XVIIIe siècles à l'aide des machines électrostatiques, puis de manière quantitative à partir des travaux de Charles Augustin Coulomb (1736-1806) suivis par de nombreux autres qui s'appuyèrent sur des inventions dont la première significative fut la bouteille de Leyde, furent regroupées et représentées pour la première fois dans un formalisme unifié par Sir James Clerk Maxwell (1831-1879). La découverte des ondes électromagnétiques par Heinrich Rudolph Hertz (1857-1894) fut le prélude à l'invention de la radio en 1896 par Marconi. Les équations de Maxwell, complétées par la relation de force de Lorentz (1853-1928), simplement représentées depuis dans un formalisme plus compact sont non seulement toujours d'actualité mais ont même donné naissance à la relativité. On peut en effet dire que Einstein a transposé à la mécanique le caractère d'invariance par transformation de Lorentz observé dans le comportement des équations de Maxwell-Lorentz. On peut, en accord avec ces dernières, classer les actions à distance en trois catégories :

- Une action purement électrique qui correspond à la répulsion/attraction mécanique de deux charges distantes et qui donne lieu à la définition du potentiel Coulombien.
- Une action purement magnétique qui correspond à la répulsion/ attraction de deux aimants et permet la définition d'un potentiel magnétique scalaire (à ne pas confondre avec le potentiel vecteur).
- Pour finir une action combinée qui se produit dès que les phénomènes présentent des variations suffisamment rapides dans le temps et qui correspond à la propagation des ondes électromagnétiques.

Notons que les deux premières actions ne se propagent pas, la troisième, correspondant à la propagation de l'énergie à la vitesse de la lumière, est associée à des ondes transversales (les ondes longitudinales n'étant pas compatibles avec les équations de Maxwell). Notons aussi que les applications de l'action des forces à distance peuvent présenter un caractère macroscopique mécanique lorsque les charges sont liées à la matière, ou un caractère macroscopique seulement électrique lorsque les charges sont libres dans une matière solide immobile.

Nous appellerons dans ce qui suit : « influence électrique » ou tout simplement « influence » le transport d'énergie à distance par la seule force électrique ; « induction magnétique » ou tout simplement « induction » le transport d'énergie à distance par la seule force magnétique. Les ondes électromagnétiques étant le cas particulier ou l'énergie se propage par oscillations en quadrature de ces deux formes d'énergie.

Seules les ondes électromagnétiques peuvent véhiculer de l'énergie sur de grandes distances, les autres cas correspondent à de l'énergie stockée aux alentours immédiats des générateurs, l'énergie est seulement disponible à courte distance, c'est-à-dire localement. Mathématiquement la densité d'énergie que l'on peut associer à des potentiels scalaires décroît très rapidement avec la distance.

Les applications de l'influence et de l'induction sont nombreuses et variées. En ce qui concerne les applications mécaniques de l'influence on peut citer notamment l'électroscope et les projecteurs de charges (peintures, encres, poussières), utilisés dans des machines telles que projecteurs de peintures, photocopieurs, nettoyeurs d'atmosphère. Les applications mécaniques de l'induction (aimants, électroaimants) sont extrêmement répandues.

Dans le cadre des applications de transformation de l'énergie mécanique en énergie électrique et inversement, on peut citer en ce qui concerne l'induction magnétique : les moteurs et générateurs électriques usuels. Il existe aussi des moteurs à influence, les générateurs à influence étant aussi appelés improprement « machines électrostatiques ». Le stockage local de l'énergie magnétique (induction) est réalisé par des composants appelés bobines ou selfs alors que le stockage local de l'énergie électrique (influence) est réalisée par des condensateurs. Des agencements particuliers de selfs ou de condensateurs permettent de réaliser des transformateurs à induction ou à influence. Il faut noter que de tels dispositifs font intervenir des courants alternatifs. Les lois de l'influence et de l'induction restent valables en régimes variables tant que les fréquences utilisées sont assez basses, on parle alors de régimes quasi-statiques ou quasi-stationnaires. Dans la pratique il faut que la taille du dispositif reste petite devant la longueur d'onde dans le milieu concerné. Pour des fréquences supérieures, influence et induction ne sont plus dissociables et l'on doit tenir compte de phénomènes de propagation.

L'invention que nous allons décrire s'appuie sur la possibilité de transporter à courte distance à travers le vide ou tout matériau diélectrique isolant de l'énergie électrique par influence. A ce titre l'induction et les ondes électromagnétiques ne participent pas au principe utilisé et ne pourront donc être présentes que dans le cadre de dispositifs annexes ou de pertes. Les dispositifs suivant l'invention mettent en jeu des formes de couplages capacitifs multiples entre plusieurs conducteurs que l'on désigne historiquement selon l'expression « conducteurs en influence partielle ». De tels régimes sont assez éloignés de l'image habituelle que nous avons de dispositifs usuels dits « à influence totale », il nous paraît donc nécessaire de revenir sur les bases de l'électrostatique qui permettent de les définir plus précisément.

Si l'on dépose sur un conducteur sphérique éloigné de tout autre conducteur la charge électrique Q le potentiel V que l'on peut rattacher au conducteur est donné par : V = Q/4πεR (en prenant la convention habituelle : potentiel nul à l'infini), ou R est le rayon du conducteur et ε la permittivité électrique du milieu diélectrique environnant. La charge électrique sur un conducteur isolé est donc intrinsèquement liée au potentiel par la formule : Q=C.V (1), avec C= 4πεR. La capacité obtenue peut être appelée « capacité intrinsèque » du conducteur car elle mesure en quelque sorte le couplage pour l'influence entre l'électrode et le milieu diélectrique environnant. La valeur obtenue pour les gaz usuels est très voisine de celle que l'on obtient dans le vide. Lorsque plusieurs électrodes sont présentes dans un milieu diélectrique donné, on peut définir la capacité propre de chaque conducteur par la formule (1), la valeur obtenue est différente de celle que l'on obtient pour le conducteur isolé. De plus il convient de définir les capacités d'influence mutuelles. Dans la situation générale de n conducteurs en influence, les charges $Q_i$ (i=1,2,..,n) obtenues sur les n conducteurs sont reliées aux potentiels Vi par la relation matricielle $(Q_i)=(C_{ij})(V_i)$, la matrice $(C_{ij})$ étant une matrice nxn. Le coefficient $C_{ii}$ étant la capacité propre du conducteur i, elle n'est égale à sa capacité intrinsèque que si les distances entre le conducteur i et les autres conducteurs sont grandes devant la taille du conducteur i. Lorsque deux conducteurs sont très poches et présentent des surfaces en vis à vis importantes, on peut montrer que l'on a : $C_{11}=C_{22}=-C_{12}=-C_{21}=C$ et $Q_1=-Q_2=Q$ et donc : $Q=C(V_1-V_2)$. On dit alors que les conducteurs sont en influence totale. On peut aussi dire que deux conducteurs sont en influence totale lorsque que toutes les lignes de champ quittant un conducteur rejoignent systématiquement l'autre, ils sont en influence seulement partielle si certaines lignes aboutissent sur des conducteurs autres que les deux conducteurs initialement considérés.

Le cas de l'interaction entre deux dipôles électriques distants sur lequel s'appuie l'invention relève de l'influence partielle entre quatre conducteurs et ne peut donc en aucun cas se ramener à un assemblage de condensateurs usuels même asymétriques. Il n'est pas possible d'utiliser dans de tels cas l'expression « couplage capacitif » pour décrire la situation globale, par contre il est possible de parler de matrice des capacités ou de coefficients capacitifs.

La physique de l'influence dans le cas général où elle n'est pas totale est relativement complexe. On peut noter que la loi de conservation de l'intensité n'y est plus vérifiée. Il est facile de comprendre que si dans un régime dynamique des charges électriques se déposent sur les parois d'un conducteur fin et allongé, leur quantité ou plus précisément leur flux diminue avec la distance (et l'inverse si des charges sont collectées). Les équations de Maxwell imposent la conservation du flux de densité de courant total : $j_m + j_d$ où : $j_d$ est la densité de courant de déplacement donnée par : $\mathbf{j_d} = \varepsilon \dfrac{\partial \mathbf{E}}{\partial t}$ et

$j_m$ la densité de courant matériel (celui qui circule dans les conducteurs), le courant de déplacement remplace donc le courant matériel à la frontière conducteur/diélectrique. Ceci restant valable pour le vide qui est donc aussi traversé au voisinage d'un conducteur par un courant de déplacement. La densité de courant de déplacement, usuellement très faible, peut être augmentée par l'utilisation de champs électriques intenses et de fréquences élevées. Toutefois contrairement à une idée fausse répandue, les courants de déplacement ne sont pas toujours associés à des ondes électromagnétiques (sinon il faudrait considérer que les condensateurs en régime alternatif sont traversés par des ondes).

Ces phénomènes locaux électriques ou magnétiques qui ne sont pas associables à des ondes et qui imposent de considérer le diélectrique environnant les conducteurs comme un milieu sous contraintes électriques ou magnétiques, peuvent être appelés par analogie avec les milieux matériels : « phénomènes de transport ». Ainsi les électrons qui se déplacent de manière cohérente dans les conducteurs ne sont pas en contact direct et interagissent entre eux au même titre que des conducteurs matériels distants, par influence.

Bien qu'il s'agisse de transmission d'énergie à distance sans contact solide à travers un milieu diélectrique, l'invention ne relève pas, du domaine de la transmission de l'énergie électromagnétique sous forme d'un rayonnement mais bel et bien du domaine du transport de l'énergie électrique.

Etat de la technique :

L'influence a été découverte et étudiée bien avant l'induction. En dehors des condensateurs à influence totale, elle n'a donné lieu jusqu'à présent qu'a assez peu d'applications industrielles purement électriques. Les forces mécaniques que l'on peut obtenir par influence entre deux charges distantes sont très faibles par rapport à celles que l'on sait produire entre deux aimants. Des transports d'énergie importants ne peuvent être obtenus pour des dispositifs à influence partielle que dans le cas de l'utilisation de générateurs hautes tensions hautes fréquences.

Les conditions nécessaires au transport de l'énergie électrique par influence furent réunies pour la première fois par Nikola Tesla (1856-1943). Les dispositifs utilisés étaient de grandes tailles (plusieurs dizaines de mètres) et les effets observés s'étendaient sur plusieurs dizaines de kilomètres soit sur des distances supérieures à la longueur d'onde. Ainsi Tesla ne se plaçait pas dans un régime quasi-statique. Dans son brevet US 649621 en 1900, il décrit un agencement permettant la transmission transversale d'énergie à distance. Le fait qu'il utilise la terre d'une part et les couches ionisées de l'atmosphère d'autre part (expériences de Colorado Spring), nous font penser qu'il réalisa plutôt une propagation d'ondes transversales partiellement guidées par l'ionosphère. Il a d'ailleurs observé un jour d'orage les premières ondes électromagnétiques stationnaires. Plus récemment Stanislav et Constantin Avramenko dans le brevet WO 93/23907 pensent obtenir des ondes longitudinales se propageant le long d'un fil très fin. Le dispositif récepteur qu'ils utilisent dans un des modes de réalisation semble faire appel à la technique du réservoir de charge que nous utilisons aussi dans notre invention. Dans ce même brevet le générateur (vu comme un émetteur d'ondes très particulières) est donc d'une nature différente de la charge. On peut noter à ce titre, l'absence d'une connexion sur une des bornes du circuit secondaire du transformateur.

Notre invention se distingue des travaux et brevets de Tesla par le fait que l'énergie est transmise sur de courtes distances préférentiellement sur un axe longitudinal (parallèlement au champ électrique) et sans nécessiter l'usage d'une connexion à la terre.

Notre invention se distingue du brevet de S. et C. Avramenko par le fait que l'énergie est transmise sur de courtes distances sans fils ni ondes et par le fait que générateurs et charges sont de même nature.

Notre invention se distingue de toute forme d'assemblage de condensateurs même asymétriques par le fait que le mode le plus simple de réalisation de l'invention ne se réduit en aucun cas à un tel assemblage.

Exposé de l'invention :

Le dispositif selon l'invention propose un moyen de transport de l'énergie électrique à relativement courte distance à travers un milieu diélectrique sans utiliser de fils électriques ni nécessiter la moindre forme de contact matériel telle que par exemple l'utilisation de la terre. A ce titre l'invention permet de transporter de l'énergie entre deux points distants dans le vide. La technique utilisée est basée sur l'usage de l'interaction coulombienne que l'on appelle aussi : influence électrique.

Le mot «transport», ainsi que les verbes et adjectifs dérivés, désignent le caractère mécanique longitudinal lié au concept de force électrique. Ainsi, même si dans le cadre de l'invention cette dernière s'exerce à distance à travers le vide, son action ne doit pas être confondue avec la transmission électromagnétique qui présente un caractère transversal non mécanique et qui ne participe pas au principe utilisé autrement que sous la forme de pertes non désirées.

Plus précisément le dispositif suivant l'invention se place dans le cadre de l'influence partielle, cadre dans lequel certains conducteurs doivent être considérés soit comme isolés et en interaction seulement avec le milieu diélectrique environnant (optionnellement le vide) soit comme en interaction avec plusieurs conducteurs distants parfois lointains et indéfinis. Pour certains conducteurs utilisés dans le cadre de l'invention, la capacité intrinsèque du conducteur isolé est la propriété physique importante qui donne l'ordre de grandeur des performances obtenues.

L'invention prévoit un système de transport de l'énergie électrique sur courte distance à travers le vide et/ou bien des matériaux diélectriques, le système comportant : deux dispositifs dipolaires oscillants disposés quasi-longitudinalement et à courte distance, asymétriques, extérieurs l'un à l'autre, un dispositif étant un producteur d'énergie, l'autre dispositif étant consommateur d'énergie, où ledit dispositif producteur d'énergie comporte deux électrodes génératrices, une génératrice active, l'autre génératrice passive, ledit dispositif consommateur d'énergie comporte deux électrodes électromotrices, une électromotrice active, l'autre électromotrice passive; et où entre les deux électrodes actives génératrice et électromotrice existe un couplage capacitif, les deux électrodes actives, sont soumises à de forts potentiels, une zone de champ intense est limitée à un espace situé entre ces électrodes actives, et les électrodes passives sont extérieures à cette zone de champ intense, soumises à de faibles potentiels.

L'outil mathématique qui est adapté pour traiter le cas de multiples conducteurs en interactions est la description matricielle. Dans le cas limite des milieux que l'on peut considérer comme continus les physiciens utilisent aussi l'expression de « champ proche » par opposition au champ lointain dont le traitement est plus aisé.

Le dispositif suivant l'invention ne peut en aucun cas se résumer à un assemblage de condensateurs classiques qui auraient pour objet de réaliser un couplage électrique entre deux parties solides disjointes. Dans un tel assemblage chaque élément (un condensateur classique) peut être considéré comme totalement disjoint des autres alors que dans le cadre de l'invention les couplages réalisés entre les électrodes sont multiples.

Le dispositif suivant l'invention fait appel à des champs électriques intenses présentant des variations temporelles rapides pour utiliser dans les milieux diélectriques à l'extérieur des conducteurs le courant de déplacement de Maxwell usuellement extrêmement faible. Ces mêmes champs sont associés à des potentiels et des impédances pouvant être très élevés en fonction de la taille des dispositifs réalisés.

Dans le dispositif selon l'invention les fréquences mises en oeuvre, appelées dans la suite hautes fréquences (H.F.), sont beaucoup plus élevées que celles utilisées habituellement pour le transport de l'énergie électrique mais restent malgré tout assez basses pour que le rayonnement électromagnétique soit négligeable. Ceci est obtenu lorsque la taille du dispositif ne représente qu'une petite partie de la longueur d'onde dans le milieu extérieur environnant ce dernier ou par une utilisation judicieuse des formes et des déphasages appliqués aux différentes électrodes.

Dans les modes de réalisation de l'invention que nous allons décrire, des champs rapidement variables de grande amplitude sont obtenus à l'aide de générateurs hautes tensions hautes fréquences (dans la suite H.T.H.F). Aux générateurs H.T.H.F. seront associées des charges H.T.H.F.

Les tensions alternatives, sont soit purement sinusoïdales soit composées de plusieurs fréquences et vont de quelques centaines de volts pour des applications à très faibles puissances ou dans le cadre de dispositifs de très petites tailles (distances micrométriques) jusqu'à plusieurs MV (millions de volts) pour des applications à fortes puissances ou de grandes tailles.

Les générateurs et charges H.T.H.F. fonctionnant sous de hautes tensions et faibles intensités présentent usuellement des impédances élevées.

L'invention prévoit aussi une méthode de transport de l'énergie électrique sur courtes distances à travers le vide et/ou bien des matériaux diélectriques, caractérisé par : la disposition quasi-longitudinale de deux dispositifs dipolaires oscillants à courte distance, asymétriques, extérieurs l'un à l'autre, l'un producteur l'autre consommateur d'énergie, et l'existence d'un couplage capacitif entre principalement deux électrodes actives de chaque dispositif dipolaire, l'une, l'électrode génératrice intégrée au producteur et l'autre électrode électromotrice au consommateur, ces électrodes actives étant soumises à de forts potentiels, une zone de champ intense étant limitée à l'espace situé entre ces électrodes actives, les électrodes de chaque dispositif dipolaire, l'une électrode génératrice intégrée au producteur et l'autre électrode électromotrice au consommateur, extérieures à cette zone étant passives, soumises à de faibles potentiels.

Description des figure

La figure 1 représente une association possible production/consommation selon un exemple de système conforme à l'invention, dans laquelle:

la figure 1(a) représente le cas où l'électrode passive côté générateur est une électrode de grande taille, et
la figure 1(b) représente le cas où le générateur HTHF est relié à la terre.

La figure 2 représente des exemples différents de configuration du dispositif côté consommateur, dans laquelle :

la figure 2(a) représente une configuration selon laquelle un transformateur à induction alimente une charge finale à basse impédance,
la figure 2(b) représente une configuration utilisant une charge à haute impédance, et
la figure 2(c) représente une configuration selon laquelle al charge est constituée d'un gaz ionisé à basse pression contenu dans une enveloppe solide diélectrique.

La figure 3 représente des exemples de modes de réalisation de l'invention, dans laquelle :

la figure 3(a) représente une configuration selon laquelle le transport de l'invention peut se faire dans un sens opposé à celui du transport, simultané, de l'énergie électrique, et
la figure 3(b) représente une configuration permettant le transport bidirectionnel de l'information ;

La figure 4 représente un mode de réalisation d'un dispositif consommateur mobile qui reste alimenté indépendamment de sa position angulaire dans l'espace.

La figure 5 représente un mode de réalisation permettant l'alimentation de plusieurs dispositifs consommateurs depuis un seul dispositif producteur.

La figure 6 représente un mode de réalisation permettant la distribution de l'énergie électrique sur de moyennes et grandes distances.

Description des modes de réalisation

Les dispositifs suivant l'invention se composent d'au moins deux parties disjointes :

- un dispositif producteur d'énergie composé d'au moins un générateur H.T.H.F et de plusieurs électrodes électriquement raccordées à ce ou ces générateurs dont le rôle est de charger le milieu environnant, optionnellement le vide, d'énergie électrique.
- un dispositif consommateur d'énergie composé d'au moins une charge H.T.H.F. et optionnellement d'électrodes raccordées électriquement à cette ou ces charges.

Les électrodes et les fils de liaison sont définis dans le cadre de l'invention comme des milieux conducteurs ayant des extensions spatiales et des formes bien définies. Mathématiquement ils correspondent à des surfaces ou des volumes pratiquement équipotentiels. Les électrodes et les fils de liaison sont constitués habituellement de métaux conducteurs mais sont optionnellement partiellement ou totalement constituées de liquides conducteurs ou de gaz ionisés éventuellement contenus par des matériaux diélectriques solides.

Les générateurs H.T.H.F selon l'invention sont obtenus de nombreuses manières différentes par exemple à partir d'une basse tension alternative appliquée au primaire d'un transformateur à induction fournissant une haute tension au secondaire et capable de fonctionner à relativement hautes fréquences, mais aussi optionnellement à l'aide de transformateurs piézoélectriques ou toute technologie donnant les mêmes résultats.

Les charges H.T.H.F selon l'invention sont des dispositifs similaires à ceux des générateurs H.T.H.F, optionnellement elles utilisent pour alimenter un dispositif basse tension les mêmes technologies que les générateurs lorsqu'elles sont réversibles.

Le couplage obtenu dans le cadre des dispositifs suivant l'invention est bidirectionnel simultané et vérifie le principe de l'action réaction.

Il en découle que, lorsque les technologies utilisées aussi bien du côté du générateur que du côté de la charge sont réversibles, alors l'ensemble du dispositif est réversible et l'énergie peut circuler indifféremment dans les deux sens.

Lorsque l'on considère des systèmes simples non composés d'électrodes multiples soumises à des déphasages, les générateurs H.T.H.F., comme optionnellement les charges H.T.H.F., sont reliés par des fils conducteurs à deux types d'électrodes placées préférentiellement à courtes distances des générateurs, afin d'éviter les pertes radiatives.

Les susdites électrodes possèdent des propriétés et des fonctions différentes suivant leurs tailles. Une grande électrode alimentée par le même courant alternatif qu'une petite, est soumise à des tensions plus faibles et génère ainsi dans son environnement des champs électriques plus faibles, nous nommons ce genre d'électrode : « électrode passive » ou « électrode réservoir ». Le réservoir le plus grand que nous ayons optionnellement à notre disposition est la Terre elle même. Les électrodes de tailles plus petites sont associées à des champs plus importants et sont nommées: «électrodes actives », nous désignons sous le nom d' « électrodes génératrices» celles qui créent le champ et sous le nom d'« électrodes électromotrices » celles qui le subissent. Dans une forme de réalisation réversible les électrodes sont tour à tour électromotrices et génératrices suivant le sens de transport de l'énergie.

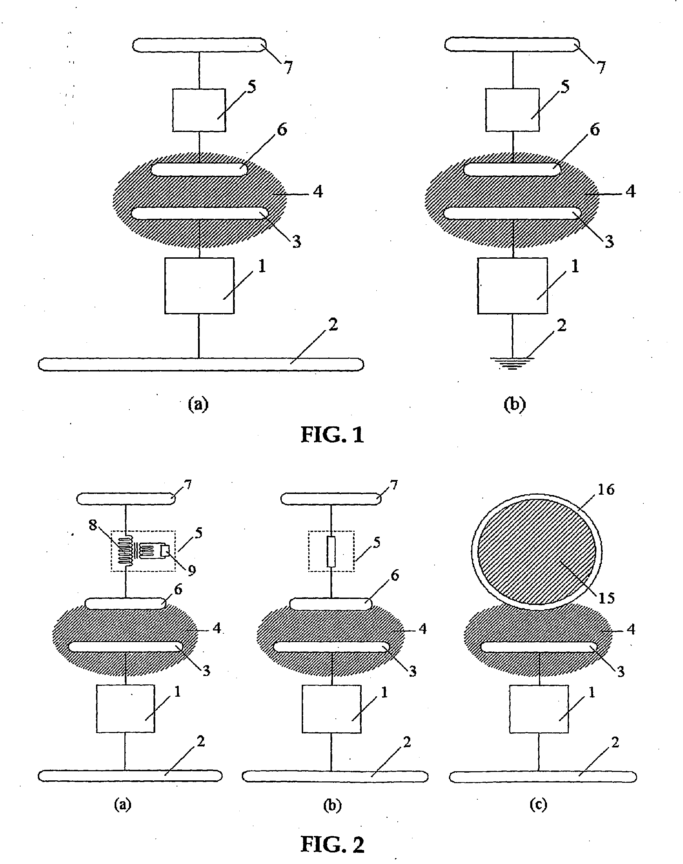

La figure 1 représente une association possible production/consommation. Un générateur H.T.H.F (1) est relié d'une part à une électrode passive de grande taille (2) (fig.1a) ou à la terre (électrode réservoir) (fig. 1b) et d'autre part à une électrode active de plus petite taille (3) (électrode génératrice) qui produit une zone de champ intense où se concentre l'énergie (4). La charge à haute impédance (5) est de son coté reliée d'une part à une électrode de petite taille (6) (électrode électromotrice) placée dans la zone où le champ est intense et d'autre part à une autre électrode de préférence de plus grande taille (7) placée dans une zone où le champ est plus faible (électrode passive).

La réalisation décrite précédemment (fig. 1), se ramène à considérer l'interaction entre deux dipôles électriques oscillants asymétriques. A ce titre les deux dipôles électriques interagissent d'une manière similaire à l'interaction obtenue entre deux selfs magnétiques traversées par des courants électriques alternatifs. Le dispositif suivant l'invention est donc l'équivalent, pour l'influence, des transformateurs à couplage partiel. Le couplage s'effectuant à travers un milieu diélectrique de permittivité $\varepsilon$ au lieu d'un milieu inductif de perméabilité magnétique $\mu$ dans le cas d'un transformateur.

Comme dans le cas du transformateur à air, de nombreuses dispositions sont possibles pour les deux dipôles électriques, l'agencement particulier où les deux dipôles sont alignés sur un même axe permet d'améliorer la portée et dans le cas particulier de l'influence de limiter le nombre des électrodes actives.

Dans le cas de charges nécessitant une adaptation d'impédance, il y a dans le cadre de l'invention au minimum seulement deux électrodes actives, une du côté du dispositif producteur ; l'électrode génératrice, et l'autre du côté du dispositif consommateur ; l'électrode électromotrice.

Dans le cas de charges qui présentent naturellement une impédance élevée, tels que des milieux basse pression ionisés, des matériaux solides fortement résistifs ou certains semi-conducteurs, de telles charges sont placées optionnellement directement dans la zone de champ intense sans nécessiter de connexions avec des électrodes supplémentaires. Dans de tels cas ce sont les limites physiques de tels milieux qui jouent le rôle des électrodes. Ainsi dans le cas où l'on alimente à distance une charge H.T.H.F. à haute impédance naturelle telle qu'un gaz ionisé contenu dans une enveloppe solide diélectrique et que l'on fait usage d'une prise de terre reliée à l'une des bornes du générateur, il n'y a plus qu'une seule électrode reliée à l'autre borne du générateur qui soit nécessaire. Cette unique électrode est alors forcément l'électrode génératrice.

La figure 2 représente différentes situations possibles pour la composition interne de la charge H.T.H.F.

- La figure 2a représente le cas ou l'usage d'un transformateur à induction (8) associé optionnellement à un dispositif redresseur (non représenté) permet d'alimenter une charge finale à basse impédance (9).
- La figure 2b représente le cas où la charge H.T.H.F. est simplement constituée d'un composant présentant naturellement une forte impédance.
- La figure 2c représente le cas où la charge H.T.H.F. est constituée d'un gaz ionisé à basse pression (15) contenu dans une enveloppe solide diélectrique (16).

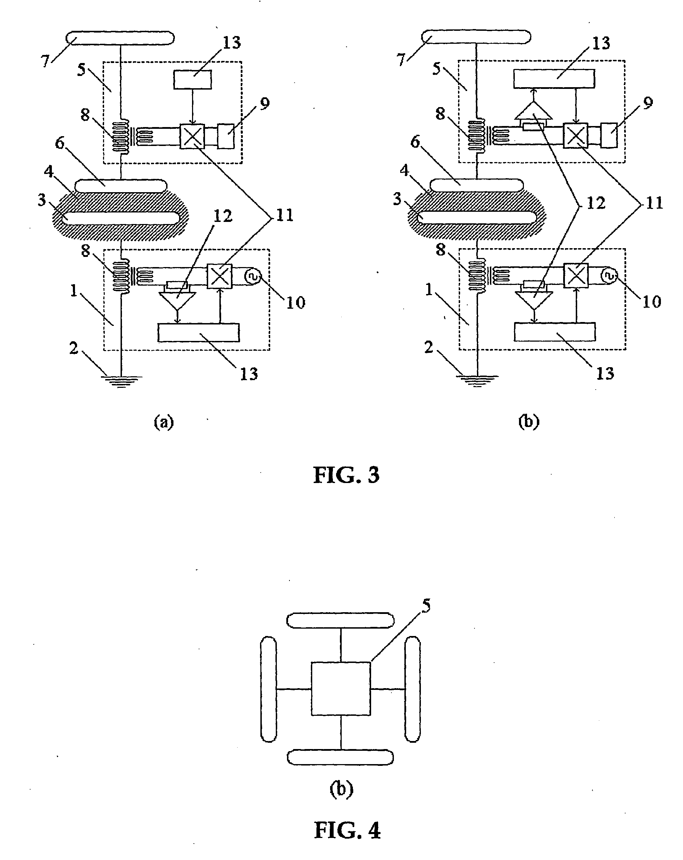

La figure 3 représente des modes de réalisation plus sophistiqués de l'invention.

- La figure 3a représente un cas où un dispositif supplémentaire de modulation (11) est inséré du côté du dispositif consommateur entre le transformateur abaisseur de tension (8) et la charge basse tension (9). Cette modulation associée à un dispositif d'amplification (12) du côté du dispositif consommateur permet le transport simultané de l'information dans un sens opposé à celui du transport de l'énergie. L'information est générée par un dispositif de contrôle et de gestion (13) placé du côté du dispositif consommateur, un dispositif similaire associé à un second modulateur placés du côté du dispositif générateur entre le transformateur élévateur (8) et la source de puissance (10) permettent à ce dernier de s'adapter à la demande en énergie du dispositif consommateur.

- La figure 3b représente un cas où une amplification et une gestion supplémentaire du côté du dispositif consommateur permettent une transmission bidirectionnelle, optionnellement simultanée, des informations entre le dispositif consommateur et le dispositif générateur.

Ces échanges ne sont pas affectés par le sens de transport de l'énergie. Une inversion du sens de transport de l'énergie est possible lorsque le montage réalisé utilise des dispositifs (9) et (10) réversibles.

Dans un mode de réalisation du dispositif précédent un protocole de communication permet au dispositif consommateur de demander au dispositif producteur de s'adapter à ses besoins en faisant varier l'amplitude moyenne des tensions appliquées sur les électrodes génératrices. Inversement le dispositif producteur peut informer le dispositif consommateur de ses réserves de puissance. Le dispositif consommateur peut être secouru par un moyen de stockage interne de l'énergie en cas de rupture momentanée du lien.

Dans un mode de réalisation de l'invention se ramenant à un couplage entre deux dipôles, qui correspond à une structure quadripolaire, l'énergie transmise décroît proportionnellement à $1/R^4$ lorsque la distance R entre les dipôles devient grande. La portée pratique d'un dipôle producteur alimentant en énergie un dipôle consommateur de petite taille relative est ainsi de l'ordre de quelques fois la taille du dipôle producteur.

Dans le cas où le dipôle consommateur dispose d'une autonomie en énergie, la portée pour le transport seulement de l'information entre le dipôle producteur et le dipôle consommateur est bien supérieure à celle évoquée précédemment si une amplification suffisante du signal reçu est réalisée aussi bien du côté du dispositif consommateur que du côté du dispositif producteur.

Dans un mode de réalisation de l'invention, le dispositif producteur se met en veille automatiquement lorsque la charge ne nécessite plus d'énergie en diminuant fortement l'amplitude moyenne des tensions appliquées à l'électrode génératrice sans rompre le lien informationnel avec le dispositif consommateur. Une veille encore plus poussée est réalisée par des interrogations intermittentes entre le dispositif producteur et le dispositif consommateur.

Enfin dans un mode particulier de réalisation seulement de l'information peut être transmise selon un mode soit mono soit bidirectionnel alterné ou simultané.

Dans certains modes de réalisation de l'invention, les dispositifs producteurs et les dispositifs consommateurs ou simplement la ou les électrodes génératrices et la ou les électrodes électromotrices sont maintenus en place par une ou plusieurs liaisons mécaniques éventuellement amovible faisant appel à des matériaux diélectriques de manière que les électrodes génératrices et les électrodes électromotrices soient en vis-à-vis sans contact électrique direct. Un tel mécanisme se rapproche d'un dispositif de type « prise électrique ».

Dans certains modes de réalisation de l'invention, les dispositifs producteurs et les dispositifs consommateurs sont mobiles les uns par rapport aux autres sans que le lien énergétique qui les unis ne soit rompu. Cette mobilité limitée en translations est en rotations est optionnellement étendue à une totale mobilité angulaire par une gestion appropriée de champs tournants. Une rotation relative entre un dispositif producteur et un dispositif consommateur est optionnellement compensée par une rotation contraire du champ obtenue soit par l'application de tensions déphasées sur un jeu d'électrodes du côté du dispositif producteur soit par une commutation interne d'un jeu d'électrodes du côté de la ou les dispositifs consommateurs.

La figure 4 représente le cas où un jeu de quatre électrodes commutées de manière interne (non représentée sur la figure) est utilisé pour qu'un dispositif consommateur mobile reste alimenté indépendamment de sa position angulaire dans l'espace. Il faut un jeu d'au minimum 6 électrodes si le dispositif consommateur peut tourner sur deux axes.

La gestion de la rotation du ou des champs exploite optionnellement le lien informationnel entre le ou les dispositifs producteurs et le ou les dispositifs consommateurs.

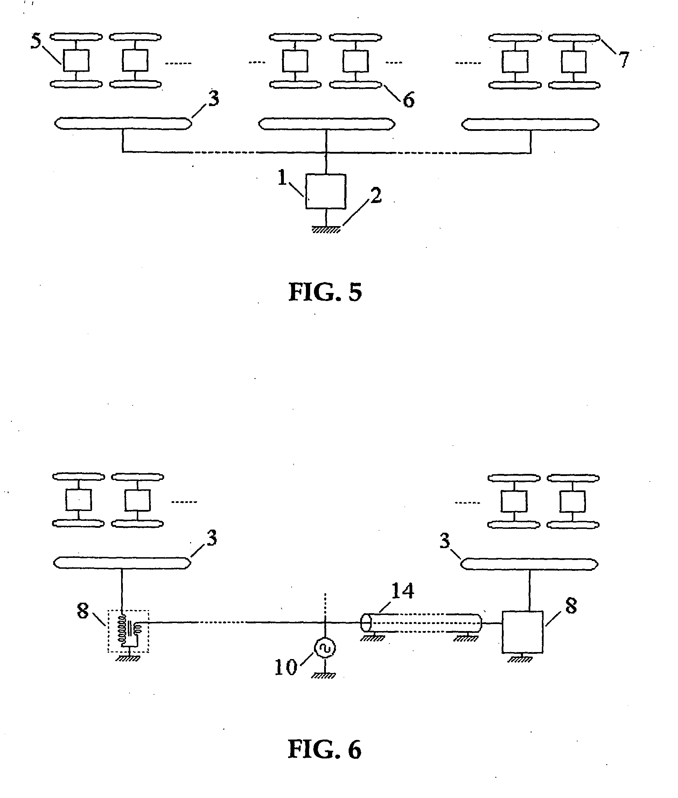

La figure 5 représente un mode de réalisation pour la distribution de l'énergie à partir d'un seul dispositif producteur à plusieurs dispositifs consommateurs sur de courtes distances.

La figure 6 représente un mode de réalisation possible pour la distribution d'énergie sur de moyennes ou grandes distances. Dans la figure 6 l'énergie est fournie au circuit par un générateur haute fréquence basse tension (10), elle est ensuite distribuée à des transformateurs élévateurs distants (8), l'usage de la distribution basse tension permettant de limiter la puissance réactive due à la capacité propre des câbles et les pertes Joules qui lui sont associées ainsi que les rayonnements induits par les câbles (partie gauche de la figure 6). Pour des distances encore plus grandes une ligne de propagation de type câble coaxial (14) peut aussi être utilisée pour limiter les pertes par radiations électromagnétiques (partie droite de la figure 6).

Les électrodes comme les fils de liaison aussi bien du côté du dispositif producteur que du côté du dispositif consommateur ne nécessitent pas d'être de bons conducteurs et ont optionnellement une impédance relativement élevée. Ils sont avantageusement constitués de très peu de matériaux conducteurs ou semi conducteurs.

Les électrodes actives dans les réalisations mettant en jeu de fortes puissances sont optionnellement recouvertes d'un ou plusieurs matériaux solides isolants ou plus généralement d'une matière présentant une forte tension de claquage et une faible conductivité surfacique afin de garantir la sécurité de l'utilisateur en empêchant une forte augmentation locale de la densité de courant en cas de contact accidentel localisé.

## Revendications

1. Système de transport de l'énergie électrique sur courte distance à travers le vide et/ou bien des matériaux diélectriques, le système comportant :

    deux dispositifs dipolaires oscillants (1-3,5-7) disposés quasi-longitudinalement et à courte distance, asymétriques, extérieurs l'un à l'autre, un dispositif (1-3) étant producteur d'énergie, l'autre dispositif (5-7) étant consommateur d'énergie,
    où ledit dispositif producteur d'énergie comporte deux électrodes génératrices, une génératrice active (3), l'autre génératrice passive (2),
    ledit dispositif consommateur d'énergie comporte deux électrodes électromotrices, une électromotrice active (6), l'autre électromotrice passive (7);
    et où entre les deux électrodes actives génératrice (3) et électromotrice (6) existe un couplage capacitif, les deux électrodes actives (3,6), sont soumises à de forts potentiels, une zone de champ intense est limitée à un espace (4) situé entre ces électrodes actives (3,6), et les électrodes passives (2,7) sont extérieures à cette zone de champ intense, soumises à de faibles potentiels.

2. Système selon la revendication [1], **caractérisé en ce que** de l'énergie potentielle est fournie à l'espace (4) situé entre les électrodes actives par un ou des dispositifs producteurs comportant au moins ladite électrode active génératrice (3) reliée à un générateur haute tension haute fréquence (1) et soumise à de fortes variations de potentiel, l'autre extrémité du générateur étant reliée soit à au moins l'électrode passive génératrice (2), de préférence de plus grande taille, distante de l'électrode active génératrice (3), qui fait office de réservoir de charges, soit remplacée par une connexion à la terre.

3. Système selon la revendication [2], **caractérisé en ce que** de l'énergie est utilisée à distance par un ou des dispositifs consommateurs optionnellement similaires à celui utilisé pour la fourniture de l'énergie, le dispositif consommateur comportant une charge haute tension haute fréquence (5) raccordée d'une part à une électrode active électromotrice (6) placée dans une zone où les variations de potentiel sont élevées et d'autre part à une électrode passive électromotrice (7) placée dans une zone ou les variations de potentiel sont plus faibles.

4. Système selon l'une des revendications précédentes, **caractérisé en ce que** qu'il peut être totalement ou partiellement réversible.

5. Système selon l'une des revendications précédentes, **caractérisé en ce que** les fréquences utilisées sont avantageusement les plus élevées possibles dans la limite où les longueurs d'ondes associées dans le milieu diélectrique environnant restent grandes devant la taille desdits dispositifs, ceci afin que l'énergie dispersée sous forme de rayonnement électromagnétique soit faible comparée à celle transportée du dispositif producteur au dispositif consommateur.

6. Système selon l'une des revendications précédentes, **caractérisé en ce que** les électrodes (2,3,6,7) sont optionnellement partiellement ou totalement recouvertes de matériaux solides diélectriques ou plus généralement d'une matière présentant une forte tension de claquage et une faible conductivité surfacique.

7. Système selon la revendication [2], **caractérisé en ce que** le générateur de hautes tensions à hautes fréquences (1) du dispositif dipolaire producteur est optionnellement réalisé à partir de basses tensions à hautes fréquences en utilisant un transformateur (8) à induction produisant sur son enroulement secondaire des hautes tensions et capable de fonctionner à hautes fréquences ou optionnellement à l'aide de transformateurs piézoélectriques ou plus généralement toute technologie pouvant générer des hautes tensions à hautes fréquences.

8. Système selon la revendication [3], **caractérisé en ce que** la charge (5) du dispositif dipolaire consommateur est optionnellement constituée d'une charge basse tension fonctionnant en haute fréquence reliée à un dispositif abaisseur de tension réalisé soit à l'aide du transformateur à induction (8) soit à l'aide d'un transformateur piézoélectrique ou plus généralement toute technologie donnant le même résultat.

9. Système selon la revendication précédente, **caractérisé en ce que** le dispositif dipolaire consommateur (5-7) comporte une charge (5) constituée d'un milieu présentant une faible conductivité, tel que par exemple un gaz faiblement ionisé (15) contenu dans une enveloppe diélectrique (16), ou constituée d'un milieu solide fortement résistif ou constituée d'un semiconducteur, ladite charge fonctionnent directement en hautes tensions à hautes fréquences en étant placée dans la zone de champ intense entourant l'électrode génératrice du dispositif producteur et sans nécessiter, du côté consommateur, de dispositif abaisseur de tension ou d'électrodes additionnelles.

**10.** Système selon la revendication [3], **caractérisé en ce que** les électrodes génératrices appartenant au dispositif producteur et les électrodes électromotrices appartenant au dispositif consommateur présentent entre elles une ou plusieurs liaisons mécaniques amovibles de type prise électrique sans qu'aucun contact électrique solide ne soit réalisé entre les deux parties amovibles.

**11.** Système selon la revendication [3], **caractérisé en ce que** les dispositifs producteur et consommateur présentent, en l'absence de tout lien mécanique entre eux, certains degrés de mobilité en translations et en rotations relatives sans que le lien énergétique qui les unis ne soit rompu.

**12.** Système selon la revendication [3], comportant un ou des dispositifs consommateurs, **caractérisé en ce que** ledit un ou des dispositifs consommateurs comportant seulement deux électrodes et d'orientations quelconques sont tous alimentés si le dispositif producteur génère par l'utilisation de déphasages appliqués à un jeu d'électrodes internes un champ tournant, ou en ce que ledit un ou des dispositifs consommateurs constitués d'une charge raccordée à un jeu d'électrodes commutées de façon interne, fonctionnent quelles que soient leurs positions angulaires par rapport à un champ d'orientation donnée.

**13.** Système selon l'une des revendications 1 à 6, ou 10 à 12, **caractérisé en ce que** la puissance fournie est optionnellement distribuée sur plusieurs dispositifs consommateurs distants par un seul dispositif producteur équipé soit d'une seule grande électrode génératrice soit de plusieurs petites électrodes génératrices ou **caractérisé par** la production centralisée de l'énergie à l'aide d'un générateur haute fréquence à basse tension (12), l'énergie étant ensuite distribuée vers des transformateurs haute tension distants (13) via des câbles coaxiaux (14) qui permettent de transmettre l'énergie à des distances cette fois bien supérieures à la longueur d'onde correspondant à la fréquence utilisée.

**14.** Système selon la revendication [3], **caractérisé en ce que** le dispositif producteur et le dispositif consommateur étant en influence mutuelle, toutes formes de modulation par des dispositifs internes au dispositif producteur et au dispositif consommateur faisant appel à la ou les fréquences utilisées pour le transport de l'énergie où à d'autres fréquences superposées ne produisant pas d'importantes pertes par rayonnement, permettent le transfert bidirectionnel simultané de signaux transportant de l'information indépendamment du sens de transport de l'énergie.

**15.** Système selon l'une des revendications 1 à 6, ou 10 à 14, **caractérisé en ce que** l'ordre de grandeur de la portée effective du transport de l'énergie est défini par la taille du dispositif producteur lorsque les dispositifs consommateurs sont de petite taille.

**16.** Système selon la revendication précédente, **caractérisé en ce que**, dans le cas où une amplification des signaux reçus est réalisée aussi bien du côté du dispositif producteur que du dispositif consommateur, optionnellement pourvu d'un moyen de stockage interne de l'énergie, de l'information seulement peut être transportée de manière mono ou bidirectionnelle, optionnellement par intermittences, sur des distances nettement plus élevées.

**17.** Méthode de transport de l'énergie électrique sur courtes distances à travers le vide et/ou bien des matériaux diélectriques, **caractérisé par** :

la disposition quasi-longitudinale de deux dispositifs dipolaires oscillants (1-3,5-7) à courte distance, asymétriques, extérieurs l'un à l'autre, l'un producteur (1-3) l'autre consommateur (5-7) d'énergie, et
l'existence d'un couplage capacitif entre principalement deux électrodes actives de chaque dispositif dipolaire, l'une, l'électrode génératrice (3) intégrée au producteur et l'autre électrode électromotrice (6) au consommateur, ces électrodes actives (3,6) étant soumises à de forts potentiels, une zone de champ intense étant limitée à l'espace (4) situé entre ces électrodes actives (3,6), les électrodes (2,7) de chaque dispositif dipolaire, l'une électrode génératrice (2) intégrée au producteur et l'autre électrode électromotrice (7) au consommateur, extérieures à cette zone étant passives, soumises à de faibles potentiels.

**Claims**

**1.** Transport system for electrical energy over a short distance through empty space and/or through dielectric materials, said system comprising:

two asymmetric oscillating dipolar devices (1-3, 5-7) arranged quasi-longitudinally and at a short distance external to each other, wherein one device (1-3) is a producer of energy and the other device (5-7) a consumer of energy,

where said energy producing device comprises two generating electrodes, one an active generator (3) and the other a passive generator (2), said energy consuming device has two electromotive electrodes, one an active electromotive electrode (6) and the other a passive electromotive electrode (7);

and where there is a capacitive coupling between the two active generating (3) and electromotive (6) electrodes, the two active electrodes (3, 6) are subjected to high potentials, an intense field zone is limited to a space (4) located between these active electrodes (3, 6), and the passive electrodes (2, 7) are external to this intense field zone and subjected to low potentials.

2.  System according to claim 1, **characterised in that** potential energy is supplied to the space (4) located between the active electrodes by one or more producer devices comprising at least said active generating electrode (3) connected to a high-frequency high-voltage generator (1) and subjected to strong variations in potential, and the other end of the generator is connected either to at least the passive generating electrode (2), which is preferably of larger size, is remote from the active generating electrode (3) and serves as a charge reservoir, or is replaced by an earth connection.

3.  System according to claim 2, **characterised in that** the energy is used at a distance by one or more consumer devices optionally similar to that used for the supply of energy,

wherein the consumer device has a high-frequency high-voltage load (5) connected, on the one hand, to an active electromotive electrode (6) positioned in a zone where variations in potential are high and, on the other hand, to a passive electromotive electrode (7) positioned in a zone where the variations in potential are lower.

4.  System according to one of the preceding claims, **characterised in that** it can be completely or partially reversible.

5.  System according to one of the preceding claims, **characterised in that** the frequencies used are advantageously the highest possible within the bounds where the associated wavelengths in the surrounding dielectric medium remain high on the basis of the size of said devices, so that the energy dispersed in the form of electromagnetic radiation is low compared to that transported from the producer device to the consumer device.

6.  System according to one of the preceding claims, **characterised in that** the electrodes (2, 3, 6, 7) are optionally partially or completely covered with solid dielectric materials or more generally with a material having a high breakdown voltage and a low surface conductivity.

7.  System according to claim 2, **characterised in that** the generator (1) of high voltages at high frequencies of the dipolar producer device is optionally implemented from low voltages at high frequencies using an induction transformer (8), which produces high voltages on its secondary winding and is capable of operating at high frequencies or optionally by means of piezoelectric transformers or more generally any technology capable of generating high voltages at high frequencies.

8.  System according to claim 3, **characterised in that** the load (5) of the dipolar consumer device is optionally formed from a low-voltage load operating at high frequency connected to a voltage step-down device formed either by means of the induction transformer (8) or by means of a piezoelectric transformer or more generally any technology providing the same result.

9.  System according to the preceding claim, **characterised in that** the dipolar consumer device (5-7) has a load (5) formed from a medium with low conductivity such as, for example, a weakly ionised gas (15) contained in a dielectric envelope (16) or formed of a highly resistive solid medium or formed at a semiconductor, said load operating directly at high voltages at high frequencies when positioned in the intense field zone surrounding the generating electrode of the producer device and without requiring a voltage step-down device or additional electrodes on the consumer side.

10. System according to claim 3, **characterised in that** the generating electrodes belonging to the producer device and the electromotive electrodes belonging to the consumer device have one or more electric plug-type movable mechanical connections without any solid electrical contact being formed between the two movable parts.

11. System according to claim 3, **characterised in that** in the absence of any mechanical link between them, the producer and consumer devices have some degrees of relative translational and rotational mobility without the energy link that joins them being broken.

12. System according to claim 3, comprising one or more consumer devices, **characterised in that** said one or more consumer devices with only two electrodes and of any orientation are all supplied if by using phase shifts applied to a set of internal electrodes, the producer device generates a turning field, or **in that** said one or more consumer devices formed of a load connected to an internally switched set of electrodes operate irrespective of their angular positions in relation to a field of given orientation.

13. System according to one of claims 1 to 6 or 10 to 12, **characterised in that** the supplied power is optionally distributed over several remote consumer devices by a single producer device equipped either with a single large generating electrode or with multiple small generating electrodes or **characterised by** the centralised production of energy by means of a low-voltage high-frequency generator (12), and the energy is then distributed to remote high-voltage transformers (13) via coaxial cables (14), which enable the energy to be transmitted to distances that are this time much higher than the wavelength corresponding to the frequency used.

14. System according to claim 3, **characterised in that** since the producer device and the consumer device implement mutual electrical influence, any forms of modulation by internal devices at the producer device and consumer device utilising the frequency or frequencies used for the transport of energy or other superposed frequencies not producing significant losses by radiation allow the simultaneous bidirectional transfer of signals transporting information irrespective of the direction of the transport of energy.

15. System according to one of claims 1 to 6 or 10 to 14, **characterised in that** the order of magnitude of the effective range of the transport of the energy is defined by the size of the producer device when the consumer devices are of small size.

16. System according to the preceding claim, **characterised in that** in the case where an amplification of the received signals is conducted both at the producer device side and at the consumer device side, optionally provided with a means of internal storage of the energy, information on its own can be transported unidirectionally or bidirectionally, optionally intermittently, over significantly greater distances.

17. Method of transporting electrical energy over short distances through empty space and/or through dielectric materials, **characterised by**:

the quasi-longitudinal arrangement of two asymmetric oscillating dipolar devices (1-3, 5-7) at a short distance and external to each other, wherein one is a producer (1-3) of energy and the other is a consumer (5-7) of energy, and the presence of a capacitive coupling between principally two active electrodes of the two dipolar devices, one the generating electrode (3) integrated into the producer device and the other the electromotive electrode (6) at the consumer, wherein these active electrodes (3, 6) are subjected to high potentials, an intense field zone is limited to the space (4) located between these active electrodes (3, 6), and the electrodes (2, 7) of each dipolar device, one the generating electrode (2) integrated into the producer device and the other the electromotive electrode (7) at the consumer, external to this zone, are passive and subjected to low potentials.

## Patentansprüche

1. System zum Transportieren von elektrischer Energie auf kurzer Distanz durch Vakuum und/oder durch dielektrische Werkstoffe, wobei das System Folgendes umfasst:

zwei oszillierende Zweipolvorrichtungen (1-3, 5-7), die quasi längs und in kurzer Distanz, asymmetrisch außerhalb zueinander angebracht sind, wobei die eine Vorrichtung (1-3) Strom erzeugt, und die andere Vorrichtung (5-7) Energie verbraucht,
bei der die besagte Stromerzeugervorrichtung zwei erzeugende Elektroden, eine aktive erzeugende (3) und eine andere passive erzeugende Elektrode (2) umfasst,
wobei die besagte Energieverbrauchervorrichtung zwei elektromotorische Elektroden, eine aktive elektromotorische (6) und eine andere passive elektromotorische (7) Elektrode umfasst;
und bei der zwischen den beiden aktiven Elektroden, der erzeugenden (3) und der elektromotorischen (6), eine kapazitive Kopplung besteht, wobei die beiden aktiven Elektroden (3, 6) hohen Potenzialen ausgesetzt sind, ein Hochfeldbereich auf einen Raum (4) begrenzt ist, der sich zwischen diesen aktiven Elektroden (3, 6) befindet, und wobei die passiven Elektroden (2, 7) außerhalb dieses Hochfeldbereichs sind und schwachen Potenzialen ausgesetzt sind.

2. System nach Anspruch 1, **dadurch gekennzeichnet, dass** die potenzielle Energie dem Raum (4), der sich zwischen den aktiven Elektroden befindet, durch eine oder mehrere Erzeugervorrichtungen geliefert wird, die zumindest die besagte aktive erzeugende Elektrode (3) umfassen, die mit einem Hochfrequenz-Hochspannungsgenerator (1) verbunden ist und starken Potenzialveränderungen unterliegt, wobei das andere Ende des Generators entweder mit der zumindest einen passiven erzeugenden Elektrode (2), die vorzugsweise grösser und entfernt von der aktiven erzeugenden Elektrode (3) ist, die als Ladungsresevoir dient, verbunden oder durch eine Erdverbindung ersetzt ist.

3. System nach Anspruch 2, **dadurch gekennzeichnet, dass** die Energie aus der Ferne durch eine oder mehrere Verbrauchervorrichtungen benutzt wird, die optional jener ähnlich sind, die für die Lieferung der Energie benutzt wird, wobei die Verbrauchervorrichtung eine Hochspannung-Hochfrequenzlast (5) umfasst, die einerseits an eine aktive elektromotorische Elektrode (6) angeschlossen ist, die in einem Bereich angebracht ist, wo die Potentialveränderungen grösser sind, und andererseits an eine passive elektromotorische Elektrode (7), die in einem Bereich angebracht ist, wo die Potentialveränderungen schwächer sind.

4. System nach einem der vorgehenden Ansprüche, **dadurch gekennzeichnet, dass** dasselbe gänzlich oder teilweise umkehrbar sein kann.

5. System nach einem der vorgehenden Ansprüche, **dadurch gekennzeichnet, dass** die verwendeten Frequenzen vorzugsweise die höchst möglichen sind, soweit die zugeordneten Wellenlängen in der betreffenden dielektrischen Umgebung groß bleiben gegenüber der Größe der besagten Vorrichtungen, damit die in Form von elektromagnetischer Strahlung zerstreute Energie gering ist im Vergleich zu jener, die von der Erzeugervorrichtung zu der Verbrauchervorrichtung transportiert wird.

6. System nach einem der vorgehenden Ansprüche, **dadurch gekennzeichnet, dass** die Elektroden (2, 3, 6, 7) optional teilweise oder gänzlich mit festen dielektrischen Materialien oder allgemeiner mit einem Material beschichtet sind, das eine starke Durchbruchspannung und eine schwache Oberflächenleitfähigkeit aufweist.

7. System nach Anspruch [2], **dadurch gekennzeichnet, dass** der Hochfrequenz-Hochspannungsgenerator (1) der Zweipolerzeugervorrichtung optional ab Niederspannungen mit hohen Frequenzen verwirklicht ist, indem ein Induktionstransformator (8) benutzt wird, der an seiner Sekundärwicklung hohe Spannungen erzeugt und imstande ist, bei hohen Frequenzen oder optional mit Hilfe von piezoelektrischen Transformatoren oder allgemeiner mit jeder Technologie, die hohe Spannungen mit hohen Frequenzen erzeugen kann, zu funktionieren.

8. System nach Anspruch 3, **dadurch gekennzeichnet, dass** die Last (5) der Zweipolverbrauchervorrichtung optional durch eine Niederspannungslast gebildet ist, die bei hoher Frequenz funktioniert, die an einer Spannungsminderer-Vorrichtung angeschlossen ist, die entweder mittels des Induktionstransformators (8) oder mittels eines piezoelektrischen Transformators oder allgemeiner mittels jeder Technologie hergestellt ist, die dasselbe Ergebnis liefert.

9. System nach dem vorgehenden Anspruch, **dadurch gekennzeichnet, dass** die Zweipolverbrauchervorrichtung (5-7) eine Last (5) umfasst, die durch ein Medium gebildet ist, das eine schwache Leitfähigkeit aufweist, wie zum Beispiel ein schwach ionisiertes Gas (15), das in einem dielektrischen Behälter (16) enthalten ist, oder durch ein stark resistives festes Medium oder noch durch einen Halbleiter gebildet ist, wobei die besagte Last unmittelbar bei Hochspannungen mit hohen Frequenzen funktioniert, indem sie in einen Hochfeldbereich platziert wird, der die erzeugende Elektrode der Erzeugervorrichtung umgibt, und ohne an der Verbraucherseite eine Spannungserniedrigungsvorrichtung oder zusätzliche Elektroden zu erfordern.

10. System nach Anspruch 3, **dadurch gekennzeichnet, dass** die erzeugenden Elektroden, die zu der Erzeugervorrichtung gehören, und die elektromotorischen Elektroden, die zu der Verbrauchervorrichtung gehören, untereinander eine oder mehrere lösbare mechanische Verbindungen vom Typ eines elektrischen Steckers aufweisen, ohne dass zwischen den beiden lösbaren Teilen ein fester elektrischer Kontakt hergestellt wird.

11. System nach Anspruch 3, **dadurch gekennzeichnet, dass** die Erzeuger- und Verbrauchervorrichtungen in Abwesenheit jeder mechanischen Verbindung bestimmte Translations- und Drehbeweglichkeitsgrade zueinander aufweisen, ohne dass die Energieverbindung, die dieselben verbindet, unterbrochen wird.

12. System nach Anspruch 3, das eine oder mehrere Verbrauchervorrichtungen umfasst, **dadurch gekennzeichnet, dass** die besagte eine oder mehrere Verbrauchervorrichtungen, die lediglich zwei Elektroden umfassen und eine beliebige Ausrichtung haben, alle versorgt werden, wenn die Erzeugervorrichtung unter Benutzung von Phasenverschiebungen, die auf einen Satz von inneren Elektroden angewendet werden, ein Drehfeld erzeugt, oder **dadurch**, dass die besagte eine oder mehrere Verbrauchervorrichtungen, die durch eine Last gebildet sind, die an einen Satz von Elektroden angeschlossen ist, die auf interne Art und Weise geschaltet sind, ungeachtet ihrer Winkelstellungen hinsichtlich eines Feldes mit bestimmter Ausrichtung funktionieren.

13. System nach einem der Ansprüche 1 bis 6 oder 10 bis 12, **dadurch gekennzeichnet, dass** die gelieferte Leistung optional durch eine einzige Erzeugervorrichtung auf mehrere entfernte Verbrauchervorrichtungen verteilt wird, die entweder mit einer einzigen großen erzeugenden Elektrode oder mit mehreren kleinen erzeugenden Elektroden ausgestattet ist, oder **gekennzeichnet durch** die zentralisierte Energieerzeugung mit Hilfe eines Hochfrequenz-Niederspannungsgenerators (10), wobei die Energie anschließend den entfernten Hochspannungstransformatoren (13) **durch** Koaxialkabel (14) zugeführt wird, die es erlauben, die Energie auf Distanzen zu übertragen, die diesmal viel grösser sind als die Wellenlänge, die der benutzten Frequenz entspricht.

14. System nach Anspruch 3, **dadurch gekennzeichnet, dass** die Erzeugervorrichtung und die Verbrauchervorrichtung sich gegenseitig beeinflussen, wobei alle Formen der Modulation durch innere Vorrichtungen der Erzeugervorrichtung und der Verbrauchervorrichtung, die die Frequenz oder Frequenzen, die zum Transportieren der Energie benutzt werden, oder andere überlagerte Frequenzen verwenden, die keine bedeutenden Verluste durch Strahlung hervorrufen, die gleichzeitige bidirektionale Übertragung von Signalen erlauben, die die Information transportieren, unabhängig von der Transportrichtung der Energie.

15. System nach einem der Ansprüche 1 bis 6 oder 10 bis 14, **dadurch gekennzeichnet, dass** die Größenordnung der wirksamen Tragweite des Transportierens der Energie durch die Größe der Erzeugervorrichtung definiert wird, wenn die Verbrauchervorrichtungen klein sind.

16. System nach dem vorgehenden Anspruch, **dadurch gekennzeichnet, dass** in dem Fall, dass eine Verstärkung der empfangenen Signale sowohl von der Erzeugervorrichtung als auch der Verbrauchervorrichtung erfolgt, die optional mit einem Mittel für die innere Speicherung von Energie ausgestattet ist, also dann die Information allein mono- oder bidirektional, optional intermittierend, über deutlich größere Distanzen transportiert werden kann.

17. Verfahren zum Transportieren von elektrischer Energie auf kurzen Distanzen durch Vakuum und/oder durch dielektrische Werkstoffe, **gekennzeichnet durch**:

   die quasi Längsanordnung von zwei oszillierenden Zweipolvorrichtungen (1-3, 5-7) in kurzer Distanz, asymmetrisch außerhalb zueinander, wobei die eine Strom erzeugt (1-3) und die andere Energie verbraucht (5-7), und
   das Vorhandensein einer kapazitiven Kopplung zwischen hauptsächlich den beiden aktiven Elektroden einer jeden Zweipolvorrichtung, die eine die erzeugende Elektrode (3), die in dem Erzeuger integriert ist, und die andere die elektromotorische Elektrode (6) im Verbraucher, wobei diese aktiven Elektroden (3, 6) hohen Potenzialen ausgesetzt sind, wobei ein Hochfeldbereich auf den Raum (4) begrenzt ist, der sich zwischen diesen aktiven Elektroden (3, 6) befindet, wobei die Elektroden (2, 7) einer jeden Zweipolvorrichtung, die eine die erzeugende Elektrode (2), die in dem Erzeuger integriert ist, und die andere die elektromotorische Elektrode (7) im Verbraucher, außerhalb dieses Bereichs passiv sind und schwachen Potenzialen ausgesetzt sind.

**FIG. 1**

**FIG. 2**

**FIG. 3**

(b)

**FIG. 4**

**FIG. 5**

**FIG. 6**

## RÉFÉRENCES CITÉES DANS LA DESCRIPTION

**Documents brevets cités dans la description**

- US 649621 A
- WO 9323907 A